# DEMANDE DE BREVET EUROPEEN

(11) **EP 2 397 426 A1**
(43) Date de publication de la demande: **21.12.2011**
(21) Numéro de dépôt: 11170271.8
(22) Date de dépôt: 17.06.2011
(51) Int. Cl.: B65G 51/04, B65G 51/28, G07D 11/00

(54) **Installation de remplissage en feuilles et de sécurisation de l'accès à son contenu d'une cartouche de convoyage pneumatique**

(30) Priorité: 21.06.2010 FR 1054896
(71) Demandeur: Snef, 13015 Marseille (FR)
(72) Inventeur: Renoux, Frédéric, 06200 NICE (FR); Gatto, Dominique, 06200 NICE (FR)
(74) Mandataire: Decobert, Jean-Pascal

(57) **Abrégé**

L'invention a pour objet une Installation de remplissage d'une cartouche (1) de convoyage pneumatique en objets conformés en feuilles (41). Cette installation comprend un coffre comportant un compartiment (23) de réception de la cartouche (1), des moyens de contrôle de la cartouche (1) placée à l'intérieur du coffre (16), au moins de son état en position d'ouverture et de sa mise en une position de remplissage dans laquelle une fenêtre latérale (9) que comporte la cartouche (1) est disposée en regard sur une bouche d'évacuation (19) que comporte un appareil de collecte et de distribution des feuilles vers le coffre (16), des moyens d'interdiction (34) d'accès à la cartouche (1) en position de remplissage, et un organe de commande (33) de la mise en oeuvre de moyens de manoeuvre (12) de la cartouche (1) en position de remplissage, modifiant son état depuis sa position d'ouverture initiale vers sa position de fermeture.

## Description

L'invention est du domaine des techniques de convoyage pneumatique exploitant un conteneur, ou cartouche, recevant des objets pour leur livraison par tube à partir de l'écoulement d'un fluide. Elle a pour objet une installation de remplissage d'une telle cartouche en feuilles, valeurs bancaires notamment, ainsi qu'une cartouche coopérant avec une telle installation pour son remplissage en feuilles.

Le convoyage pneumatique est utilisé pour le transport d'objets par l'intermédiaire d'une installation tubulaire qui exploite l'écoulement d'un fluide pour déplacer une cartouche à l'intérieur de l'installation. La cartouche est préalablement remplie des objets à transporter puis est introduite à l'intérieur de l'installation à un poste d'expédition, pour son convoyage vers un poste de livraison déterminé. Une application du convoyage pneumatique réside dans le transport et la livraison de valeurs bancaires agencées en feuilles, telles que des billets de banque ou des chèques bancaires par exemple. De telles modalités de convoyage présentent l'avantage de sécuriser le transport et la livraison des valeurs bancaires.

Se pose le problème général du remplissage de la cartouche et de la sécurisation de l'accès à son contenu. Idéalement, l'accès au contenu de la cartouche doit être sécurisé depuis son remplissage en valeurs bancaires jusqu'à sa vidange par un personnel autorisé au poste de livraison. Une telle démarche implique un agencement spécifique de la cartouche, pour procurer sa sécurisation à l'encontre d'un accès par un personnel non autorisé et néanmoins pour permettre son remplissage aisé par un opérateur pour lequel il est préférable d'interdire l'accès au contenu de la cartouche.

Couramment, les cartouches sont de conformation générale cylindrique pour faciliter leur circulation à l'intérieur de l'installation tubulaire. Plus particulièrement, les cartouches comprennent un corps globalement cylindrique qui forme un réceptacle des objets à contenir. Ce réceptacle est pourvu à chacune de ses extrémités axiales d'embouts respectifs, qui présentent une zone de section complémentaire à celle des tubes de l'installation pour permettre une circulation étanche de la cartouche sous l'effet d'une poussée exercée par l'écoulement du fluide. Pour un remplissage confortable de la cartouche par un opérateur, il est connu de ménager à travers la paroi du réceptacle une fenêtre latérale d'accès à son volume intérieur. Le réceptacle est équipé d'un organe d'obturation agencé en trappe ou analogue, qui est articulé sur le réceptacle pour alternativement obturer la fenêtre latérale en position de fermeture de la cartouche ou inversement libérer la fenêtre latérale en position d'ouverture de la cartouche. En position d'ouverture, la trappe est basculée vers l'extérieur de la cartouche pour dégager la fenêtre latérale, et le remplissage en objets de la cartouche peut être confortablement opéré. En position de fermeture, la trappe est rabattue vers la fenêtre latérale et est verrouillée par un mécanisme de blocage en position de fermeture, pour permettre son convoyage à travers l'installation. On pourra par exemple se reporter aux documents US-A-3189297 et US-A-4465410 qui décrivent de telles cartouches et installations de convoyage pneumatique.

La publication WO-A1-9837521 divulgue une installation apte à recevoir un conteneur. Néanmoins, cette antériorité n'offre pas de sécurisation dans les étapes de mise en oeuvre permettant notamment l'accès au capteur du conteneur devant la manipulation.

Dans le cadre d'un convoyage pneumatique de valeurs bancaires, celles-ci sont manipulées par un opérateur pour être introduites à l'intérieur d'un coffre sécurisé à l'encontre des intrusions. Un appareil est organisé pour collecter les valeurs bancaires et les amener vers l'intérieur du coffre. Un tel appareil comprend notamment un corps d'admission des valeurs bancaires agencées en feuilles, et un organe d'amenée des feuilles à travers une bouche d'évacuation vers le coffre. Régulièrement, le coffre est vidé de son contenu par l'opérateur et les feuilles sont placées à l'intérieur de la cartouche pour leur convoyage à travers l'installation tubulaire pneumatique vers le poste de livraison.

Le but de la présente invention est de proposer une installation de remplissage d'une cartouche de convoyage pneumatique en objets conformés en feuilles. Il est plus particulièrement visé par la présente invention de proposer une telle installation qui permette de remplir commodément et de manière mécanisée une telle cartouche de convoyage pneumatique, en interdisant un accès à son contenu par un personnel non autorisé. Une telle interdiction est notamment recherchée entre au moins des étapes respectivement d'installation et de retrait de la cartouche vis-à-vis de l'installation de remplissage.

Alors que les techniques existantes considèrent les phases d'ouverture et de fermeture de la cartouche de manière indépendante du fonctionnement de l'installation de convoyage, l'invention combine intimement ces deux éléments pour augmenter la sécurisation. De manière avantageuse, la cartouche peut être fermée alors qu'elle est encore présente dans un compartiment clos de l'installation. Cela garantit qu'une personne opérant le retrait de la cartouche la manipulera en position fermée.

L'installation de la présente invention est une installation de remplissage d'une cartouche de convoyage pneumatique en objets conformés en feuilles. Une telle installation associe notamment une cartouche de convoyage et un appareil de collecte et de distribution des feuilles vers un poste de collecte qui est organisé en coffre ou élément analogue d'enfermement des objets qu'il reçoit.

Préférentiellement, la cartouche est de conformation axialement étendue et comprend un corps de conformation globale cylindrique ménageant un réceptacle tubulaire de réception d'objets à convoyer. Le réceptacle est muni d'une fenêtre latérale d'accès à son volume intérieur, et la cartouche est équipée d'un organe d'obturation de la fenêtre latérale. La cartouche est encore équipée au moins en partie de moyens de manoeuvre procurant son changement d'état entre une position de fermeture dans laquelle l'organe d'obturation confine le volume intérieur du réceptacle par obturation de la fenêtre latérale, et une position d'ouverture dans laquelle la fenêtre latérale est dégagée de l'organe d'obturation pour permettre un accès au volume intérieur du réceptacle en vue de son remplissage et/ou inversement de sa vidange. L'appareil de collecte et de distribution des feuilles comprend un corps d'admission et d'acheminement des feuilles vers une bouche d'évacuation qu'il comporte, et un organe d'amenée des feuilles à travers cette bouche d'évacuation vers le poste de collecte agencé en coffre. Le coffre comporte des moyens de protection procurant un accès réservé aux objets qu'il contient par un opérateur autorisé seulement. Le coffre est muni d'une bouche d'admission des feuilles en provenance de ladite bouche d'évacuation que comporte l'appareil de collecte et de distribution.

Selon la présente invention, une telle installation est principalement reconnaissable en ce que le coffre comprend :
- un compartiment de réception de la cartouche. Selon une organisation préférée du coffre, le compartiment est muni d'un détrompeur qui comprend notamment un agencement coopérant entre la cartouche et le compartiment. Un tel agencement associe par exemple des reliefs coopérants qui sont respectivement ménagés sur la cartouche et à l'intérieur du compartiment.
- des moyens de contrôle de la cartouche placée à l'intérieur du coffre, au moins de son état en position d'ouverture et de sa mise en une position de remplissage dans laquelle la fenêtre latérale est disposée en regard sur la bouche d'évacuation. La position de remplissage de la cartouche correspond notamment à une disposition du réceptacle par rapport à l'appareil de remplissage qui autorise un passage des feuilles depuis l'appareil de remplissage vers le volume intérieur du réceptacle, successivement à travers la bouche d'évacuation de l'appareil, la bouche d'admission du coffre et la fenêtre latérale du réceptacle.
- des moyens d'interdiction d'accès à la cartouche en position de remplissage,
   et
- un organe de commande de la mise en oeuvre des moyens de manoeuvre de la cartouche placée à l'intérieur du coffre, modifiant son état depuis sa position d'ouverture vers sa position de fermeture.

L'installation procure un remplissage sécurisé de la cartouche et une interdiction d'accès à son contenu, depuis son installation à l'intérieur du coffre, puis pendant son remplissage au cours duquel un accès à la cartouche est interdit, jusqu'à son retrait hors du coffre. Le retrait de la cartouche hors du coffre est placé sous la condition préalable d'une manoeuvre de la cartouche en position de fermeture. Une interdiction d'accès au contenu du réceptacle par une personne non autorisée ou indélicate est obtenue.

Plus particulièrement, les moyens de protection que comporte le coffre associent les dits moyens d'interdiction d'accès à la cartouche en position de remplissage, et le dit organe de commande de la mise en oeuvre des moyens de manoeuvre de la cartouche qui modifie son état depuis sa position d'ouverture vers sa position de fermeture préalablement à son retrait hors du coffre.

Les moyens de manoeuvre de la cartouche intègrent de préférence des moyens de sécurisation vis-à-vis d'un accès au volume intérieur du réceptacle, et plus particulièrement de son contenu, qui sont des moyens d'interdiction d'un changement d'état de la cartouche vers sa position d'ouverture par un opérateur non autorisé. Ces moyens de manoeuvre sont notamment des moyens de mise en superposition de la fenêtre latérale que comporte le réceptacle vis-à-vis de l'organe d'obturation en position de fermeture de la cartouche, et inversement un dégagement de la fenêtre latérale en position d'ouverture de la cartouche. De tels moyens de manoeuvre associent des moyens de mobilité relative entre le réceptacle et l'organe d'obturation, tel que par exemple à partir d'un mouvement pivotant ou d'un mouvement coulissant de l'un quelconque du réceptacle et de l'organe d'obturation l'un par rapport à l'autre.

Selon une organisation avantageuse de la cartouche, celle-ci comprend deux conteneurs coaxiaux qui sont montés tournant l'un par rapport à l'autre. Un premier conteneur forme une enceinte qui ménage la paroi extérieure de la cartouche et qui loge en montage coaxial tournant un deuxième conteneur qui forme le réceptacle muni d'une première fenêtre latérale. Le deuxième conteneur comporte une deuxième fenêtre latérale et les moyens de manoeuvre de la cartouche sont agencés en moyens de manoeuvre en rotation de l'un ou l'autre des conteneurs, provoquant un changement d'état de la cartouche. L'organe d'obturation est formé par une portion de paroi du premier conteneur, et qui est placé à partir d'un mouvement de rotation relative entre les conteneurs alternativement soit en superposition sur la première fenêtre latérale en position de fermeture de la cartouche, soit inversement en décalage radial par rapport à la première fenêtre latérale. Un tel décalage radial relatif entre les deux conteneurs correspond à une mise en superposition de la première fenêtre latérale sur la deuxième fenêtre latérale en position d'ouverture de la cartouche. Les moyens de manoeuvre de la cartouche comprennent notamment des moyens de mobilité relative entre l'organe d'obturation et la fenêtre latérale que comporte le réceptacle. Ces moyens de mobilité relative sont intégrés à la cartouche et sont associés à des moyens d'entraînement en rotation des conteneurs l'un par rapport à l'autre. Selon une variante préférée de réalisation, les dits moyens d'entraînement sont intégrés sur la cartouche, qui est équipée à la fois des moyens de mobilité et des moyens d'entraînement. Selon une autre variante de réalisation, les moyens de mobilité et les moyens d'entraînement sont répartis entre la cartouche équipée des moyens de mobilité et le coffre équipé des moyens d'entraînement. Selon diverses variantes de réalisation, les dits moyens d'entraînement que comprennent les moyens de manoeuvre de la cartouche sont susceptibles d'être des moyens motorisés ou d'être des moyens d'assistance mécanique mettant par exemple en oeuvre un organe principal élastiquement déformable qui est aisément implantable sur la cartouche ou à l'intérieur du coffre, ou un organe de type électromagnétique qui est aisément implantable à l'intérieur du coffre.

Selon une approche générale de la structure des moyens de manoeuvre de la cartouche, ceux-ci associent des moyens de mobilité relative entre l'organe d'obturation et la fenêtre latérale que comporte le réceptacle qui sont implantés sur la cartouche, avec des moyens d'entraînement relatif entre l'organe d'obturation et la dite fenêtre latérale qui sont indifféremment implantés sur la cartouche ou à l'intérieur du coffre.

Il est cependant préféré la forme de réalisation avantageuse, selon laquelle les dits moyens d'entraînement sont implantés sur la cartouche et sont constitués de moyens de manoeuvre spontanée de la cartouche en position de fermeture, de sorte que la cartouche intègre ses propres moyens de sécurisation de l'accès à son contenu.

De préférence, les moyens de contrôle de la cartouche associent des moyens de détection de la cartouche en position de remplissage et des moyens de détection d'un changement d'état de la cartouche, qui sont avantageusement regroupés dans un même premier capteur de détection de la cartouche disposée à l'intérieur du coffre. Cette organisation des moyens de contrôle permet avantageusement de faciliter l'automatisation du fonctionnement de l'installation tout en simplifiant sa structure, en exploitant indépendamment l'une et/ou l'autre des fonctions de détection du premier capteur pour provoquer une opération de mise en oeuvre de l'installation. Par exemple, les moyens de détection de la cartouche en position de remplissage sont susceptibles de provoquer la mise en oeuvre des moyens d'interdiction d'accès à la cartouche. Par exemple encore, les moyens de protection que comporte le coffre sont susceptibles d'exploiter les moyens de détection d'un changement d'état de la cartouche pour autoriser un accès à la cartouche sous condition de sa mise en position de fermeture.

Selon un agencement préféré du coffre, celui-ci comprend une chambre de réception du compartiment et un élément de fermeture de la chambre. Cet élément de fermeture est avantageusement mobile entre une position de dégagement du compartiment et une position de clôture de la chambre. En position de dégagement du compartiment, celui est accessible depuis l'extérieur du coffre pour l'installation et le retrait de la cartouche. En position de clôture de la chambre, la cartouche est en position de remplissage dans laquelle un accès à la cartouche est interdit à partir de l'obstacle induit par la présence de l'élément de fermeture qui interdit un accès à la chambre depuis l'extérieur de l'installation. Plus particulièrement, la chambre est rendue inaccessible depuis l'extérieur du coffre hormis à travers la bouche d'admission qu'il comprend et qui est protégée par le corps de l'appareil de collecte et de distribution des feuilles qui la surplombe.

Plus particulièrement, le compartiment est avantageusement implanté sur l'élément de fermeture, et le coffre est équipé de moyens de détection de la position relative entre l'élément de fermeture et la chambre. Avantageusement, ces moyens de détection sont exploités pour de la mise en oeuvre des dits moyens d'interdiction. De tels moyens de détection sont notamment constitués d'un deuxième capteur de détection de l'élément de fermeture en position de verrouillage à l'intérieur du coffre.

L'élément de fermeture est susceptible d'être agencé en élément d'obturation d'une ouverture d'accès à la chambre que comporte le coffre. Selon diverses variantes de réalisation, un tel élément d'obturation est monté mobile en pivotement sur le coffre, tel que pour une porte articulée, ou encore est monté mobile en coulissement sur le coffre tel que pour une trappe coulissante ou un élément de façade d'un tiroir. L'élément de fermeture est équipé de moyens de guidage sur le coffre, préférentiellement non accessible depuis l'extérieur du coffre, et de moyens de mobilité entre ses positions de dégagement du compartiment et de clôture de la chambre. De préférence, les moyens de mobilité de l'organe de fermeture comprennent et/ou sont associés à des moyens de verrouillage de l'élément de fermeture au moins en position de clôture de la chambre, de tels moyens de verrouillage participant des moyens de protection du coffre. Selon diverses variantes de réalisation, les moyens de mobilité de l'organe de fermeture sont susceptibles d'être du type :
- à manoeuvre manuelle par un opérateur, en comprenant notamment une poignée de préhension ou organe analogue permettant de saisir et de manoeuvrer manuellement l'élément de fermeture,
- à manoeuvre motorisée mettant en oeuvre un organe moteur implanté à l'intérieur du coffre et en prise sur l'élément de fermeture,
- à manoeuvre mécaniquement assistée comprenant un organe d'entraînement bistable ou monostable à position de rappel spontanée, tel qu'au moins un organe élastiquement déformable ou un organe électromagnétique par exemple.

Les moyens de mobilité de l'organe de fermeture de type motorisé voire de type mécaniquement assisté sont susceptibles d'être exploités pour former les moyens d'interdiction d'accès à la cartouche en position de remplissage.

Selon une forme préférée de réalisation, l'élément de fermeture est agencé en tiroir qui loge avantageusement le compartiment et qui est monté coulissant sur le coffre par rapport à la chambre. Le montage coulissant du tiroir sur le coffre comprend des moyens de guidage en translation du tiroir sur le coffre. Par exemple, des organes de guidage agencés en glissières et/ou en rails sont indifféremment ménagés sur le tiroir ou sur des faces internes en regard des parois correspondantes de la chambre. Des organes de roulement sont susceptibles d'être interposés entre le tiroir ou le coffre et de tels organes de guidage. Le coffre est d'une structure simple et néanmoins robuste, qui procure une sécurisation vis-à-vis d'une tentative d'effraction, qui est commode d'utilisation pour un opérateur, qui peut aisément intégrer les organes utiles à une automatisation du fonctionnement de l'installation, et qui permet son implantation aisée par rapport à l'appareil de collecte et de distribution des feuilles.

Les moyens de détection d'un changement d'état de la cartouche comprennent le dit premier capteur, qui est un capteur de détection de la cartouche en position de remplissage et un capteur de détection d'un marquage que comporte la cartouche, marquage dont l'état varie selon les positions respectives d'ouverture et de fermeture de la cartouche. Un tel marquage est par exemple affecté à un élément mobile de la cartouche dont le déplacement est provoqué en conséquence de son passage de l'une à l'autre de ses positions d'ouverture et de fermeture, provoquant un changement d'état du marquage à partir de son déplacement conjoint avec le dit élément mobile. Selon l'exemple préféré de réalisation de la cartouche comprend deux dits conteneurs montés coaxiaux et tournant, un tel marquage est formé d'un relief que comporte l'enceinte et dont l'état varie en fonction des positions radiales relatives des conteneurs entre eux. Dans le cas d'un entraînement en rotation de l'enceinte, le relief est déplacé et le premier capteur détecte sa présence ou non. Dans le cas préféré d'un entraînement en rotation du réceptacle, le relief est formé d'un trou ou relief analogue, propre à laisser apparaître en fonction de l'état de la cartouche soit la paroi du réceptacle soit l'évidement de la fenêtre latérale qu'il comporte.

De préférence, les moyens d'interdiction d'accès à la cartouche en position de remplissage comprennent des dits moyens de verrouillage de l'élément de fermeture en position de clôture de la chambre, dont l'état par défaut est une position de verrouillage. La manoeuvre des moyens de verrouillage en position de déverrouillage est placée sous la dépendance des moyens de détection d'un changement d'état de la cartouche, et est de préférence commandée par un opérateur à partir d'une inhibition volontaire des moyens de verrouillage après changement de l'état de la cartouche vers sa position de fermeture.

Les moyens de verrouillage sont plus particulièrement manoeuvrables entre une position par défaut de verrouillage et une position commandée de déverrouillage. La position de déverrouillage correspond à une position dans laquelle les moyens de verrouillage sont inhibés et qui autorise une manoeuvre de l'élément de fermeture entre ses positions de clôture de la chambre et de dégagement du compartiment. La position commandée de déverrouillage est placée sous la dépendance d'un changement d'état de la cartouche vers sa position de fermeture, de sorte que la sécurisation de l'accès au contenu de la cartouche perdure après son retrait hors du coffre. La mise en position de déverrouillage de l'élément de fermeture est susceptible d'être spontanément réalisée à partir d'une détection d'un changement d'état de la cartouche, mais est de préférence conditionnée à l'activation manuelle par un opérateur d'un organe de commande de déverrouillage.

Selon une forme préférée de réalisation, les moyens de verrouillage sont du type à moyens électromagnétiques simple effet, mettant en oeuvre un électroaimant dont l'activation provoque une inhibition d'une mise en position par défaut des moyens de verrouillage en position de verrouillage. L'activation des moyens électromagnétiques est placée sous la dépendance des moyens de détection d'un changement d'état de la cartouche vers sa position de fermeture, et de préférence sous la dépendance d'un organe de commande de verrouillage à manoeuvre manuelle. L'activation des moyens électromagnétiques est de préférence associée à des moyens de visualisation, et plus particulièrement à un deuxième voyant de signalisation du déverrouillage des moyens de verrouillage.

Ledit organe de commande est indifféremment un organe de commande manuelle ou un organe de commande automatisée dont la mise en oeuvre est placée sous la dépendance de moyens de détection du volume de remplissage en feuilles du réceptacle. De tels moyens de détection du volume de remplissage du réceptacle sont constitués d'un troisième capteur approprié équipant le coffre, et sont susceptibles de provoquer une manoeuvre spontanée de l'organe de commande au-delà d'un seuil prédéterminé de remplissage, de préférence après validation par un opérateur. Selon une autre variante structurellement plus simple et préférée, un tel capteur est susceptible d'être exploité en association avec des moyens de visualisation par un opérateur de l'état de remplissage de la cartouche, pour l'alerter sur la nécessité de placer volontairement la cartouche en position de fermeture à partir d'une manoeuvre volontaire exercée sur l'organe de commande par l'opérateur.

Plus particulièrement, l'organe de commande est un organe de commande manuelle accessoirement associé à un organe de commande automatisée dont la mise en oeuvre est placée sous la dépendance des moyens de détection d'un changement d'état de la cartouche que comprennent les dits moyens de contrôle, et notamment de son passage en position de fermeture.

Selon une forme préférée de réalisation de l'organe de commande, celui-ci est agencé en poussoir coopérant avec des moyens de retenue de moyens de manoeuvre spontanée de la cartouche en position de fermeture que comprennent les moyens de manoeuvre de la cartouche, et plus particulièrement les moyens d'entraînement relatif des conteneurs entre eux. De préférence, les dits moyens de retenue sont implantés sur la cartouche, en coopération avec les moyens de manoeuvre qui sont eux-mêmes aussi implantés sur la cartouche. De tels moyens de retenue sont par exemple constitués d'un ensemble de blocage de la cartouche en position d'ouverture, à l'encontre de la mise sous tension d'un organe principal à déformation élastique que comprend la cartouche pour sa manoeuvre spontanée provoquant son changement d'état en position de fermeture.

Ledit organe d'amenée des feuilles vers le coffre est par exemple agencé en organe de poussée ou organe analogue apte à déplacer les feuilles depuis l'appareil de collecte et de distribution des feuilles vers l'intérieur du coffre. Le compartiment loge de préférence des moyens amortisseurs de la poussée exercée par l'organe d'amenée des feuilles vers l'intérieur du réceptacle de la cartouche.

De tels moyens amortisseurs induisent un fléchissement spontané des feuilles dans leur plan général en appui contre la paroi du réceptacle, successivement en superposition au fur et à mesure de leur introduction. Un tel fléchissement procure un empilement des feuilles qui évite leur détérioration et qui permet d'optimiser l'exploitation du volume intérieur du réceptacle. Ce fléchissement des feuilles est notamment obtenu par l'antagonisme des efforts respectivement exercés par l'organe de poussée et par les moyens amortisseurs. Selon une forme préférée de réalisation des dits moyens amortisseurs, ceux-ci comprennent un berceau de réception de la cartouche qui est monté mobile en coulissement sur le compartiment et qui repose sur au moins un organe élastiquement déformable.

Selon une forme préférée de réalisation, le coffre est équipé des dits moyens de détection du volume de remplissage en feuilles du réceptacle, qui sont notamment associés à des moyens de visualisation d'au moins un volume maximal prédéterminé de remplissage détecté.

Selon un procédé de mise en oeuvre d'une installation telle qu'il vient d'être décrit, celui-ci comprend les opérations consistant à :
- installer la cartouche en position d'ouverture dans le compartiment, notamment à partir d'une introduction de la cartouche à l'intérieur du tiroir sur le berceau que comporte le compartiment. Le coffre est de préférence équipé du détrompeur qui est ménagé entre le berceau et la cartouche, pour éviter une installation incorrecte de la cartouche dans le compartiment susceptible d'affecter la mise en position de remplissage de la cartouche.
- détecter la présence de la cartouche en position d'ouverture et en position de remplissage. La détection de la présence de la cartouche en position de remplissage est plus spécifiquement réalisée à partir d'une détection du passage de l'élément de fermeture, tiroir notamment, en position de clôture de la chambre. La cartouche est introduite à l'intérieur du compartiment en position normalement ouverte, les moyens de retenue s'opposant à son passage spontané en position de fermeture. Le cas échéant, les moyens de détection d'un changement d'état de la cartouche complètent cette détection de présence par une détection de la cartouche en position normalement ouverte.
- interdire l'accès à la cartouche en position de remplissage. Cette interdiction d'accès correspond plus particulièrement à un verrouillage de l'élément de fermeture porteur du compartiment en position de clôture de la chambre. De préférence, la position de verrouillage est une position par défaut dont la rupture est obtenue d'une activation de l'organe électromagnétique correspondant que comprennent les moyens de verrouillage.
- remplir le réceptacle de feuilles qui sont successivement introduites, indépendamment ou par lot, à partir de l'appareil de collecte et de distribution en feuilles. Ce remplissage est plus particulièrement effectué au moyen de l'organe de poussée ou organe analogue que comporte le dit appareil. Les feuilles sont amenées vers l'intérieur du réceptacle, successivement à travers la bouche d'admission que comporte le coffre et à travers la fenêtre latérale que comporte le réceptacle de la cartouche, qui est disposée en regard sur la bouche d'évacuation que comporte l'appareil de collecte et de distribution en feuilles en position de remplissage de la cartouche.
- détecter une phase terminale de remplissage de la cartouche correspondante à un volume prédéterminé de feuilles présentes dans le réceptacle. Cette opération de détection est notamment réalisée à partir des moyens de détection du volume de remplissage en feuilles du réceptacle, qui provoquent une activation des moyens de visualisation comprenant par exemple un premier voyant lumineux ou organe analogue dédié, voire encore qui induisent une commande spontanée de changement d'état de la cartouche en position de fermeture, commande de préférence validée par un opérateur.
- commander la mise en position de fermeture de la cartouche. Cette étape est de préférence effectuée par un opérateur qui manoeuvre manuellement l'organe de commande correspondant, au vu de l'information fournie par les moyens de visualisation et notamment par le premier voyant lumineux.
- rompre l'interdiction d'accès à la cartouche en position de remplissage, notamment par un déverrouillage de l'élément de fermeture autorisant son passage en position de dégagement du compartiment, et extraire la cartouche hors du coffre et plus particulièrement hors du compartiment et du tiroir. Le déverrouillage de l'élément de fermeture est de préférence effectué manuellement par un opérateur qui active l'organe électromagnétique correspondant. Une telle opération active simultanément les moyens de visualisation, et notamment d'un deuxième voyant lumineux ou organe analogue dédié.

L'opération d'installation de la cartouche comprend notamment les opérations consistant à placer la cartouche dans le dit compartiment en une position exclusive correspondante à la position de remplissage de la cartouche, et à manoeuvrer l'élément de fermeture de la chambre depuis la position de dégagement du compartiment vers la position de clôture de la chambre. La dite position exclusive correspond notamment à une mise en coopération des reliefs composant le détrompeur.

De préférence, l'interdiction d'accès à la cartouche en position de remplissage est spontanément provoquée et en ce que la rupture de cette interdiction est autorisée à partir d'une détection de la cartouche en position de fermeture.

La commande de la mise en position de fermeture de la cartouche est notamment provoquée sous contrôle d'un opérateur à partir d'une détection de la phase terminale de remplissage de la cartouche.

Les dessins ci-joints sont donnés à titre d'exemples et ne sont pas limitatifs de l'invention. Ils représentent seulement un mode de réalisation de l'invention et permettront de la comprendre aisément.

Un exemple préféré de réalisation de la présente invention va être décrit en relation avec les figures des planches annexées, dans lesquelles :
La figure 1 est une illustration en vue coupe axiale partielle d'un exemple de réalisation d'une cartouche de convoyage pneumatique apte à être remplie à partir de la mise en oeuvre d'une installation de la présente invention.
Les figures 2 et 3 sont des illustrations d'un coffre que comprend une installation de la présente invention selon une forme préférée de réalisation, respectivement en position de chargement et/ou d'extraction et en position de remplissage de la cartouche de convoyage représentée sur la figure1.
Les figures 6 à 9 sont des illustrations de bout d'une installation de la présente invention selon une forme préférée de réalisation comprenant la cartouche et le coffre représentés sur les figures précédentes, respectivement selon différentes étapes de mise en oeuvre de cette installation.

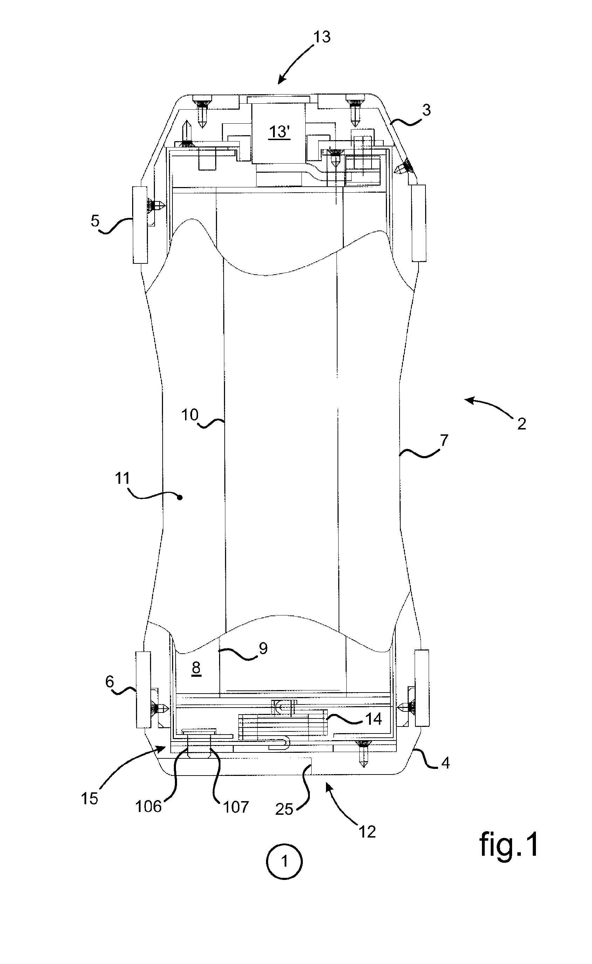

Sur la figure1, une cartouche 1 de convoyage pneumatique de conformation globale cylindrique est destinée à être propulsée par écoulement d'un fluide à l'intérieur d'une installation tubulaire de convoyage pneumatique. La cartouche 1 comprend un corps 2 qui est muni à chacune de ses extrémités d'embouts respectifs 3,4, chacun équipés de joints périphériques 5,6 de glissement à l'intérieur des tubes de l'installation. La cartouche 1 comprend deux conteneurs coaxiaux 7,8, dont un premier conteneur qui constitue une enceinte 7 en ménageant la paroi extérieure de la cartouche 1. Cette enceinte 7 loge de manière tournante un deuxième conteneur 8, qui constitue un réceptacle 8 de réception des objets à convoyer. Le réceptacle 8 est monté tournant à l'intérieur de l'enceinte 7 et comporte une première fenêtre latérale 9 pour le passage à son travers des objets qu'il est destiné à recevoir. L'enceinte 7 comporte une deuxième fenêtre latérale 10 pour permettre le passage des objets vers le volume intérieur du réceptacle 8 en position d'ouverture de la cartouche 1.

Une portion de la paroi de l'enceinte 7 est exploitée pour former un organe d'obturation 11 de la première fenêtre latérale 9 en position de fermeture de la cartouche 1, à partir d'un déplacement relatif en rotation entre l'enceinte 7 et le réceptacle 8. Un tel déplacement relatif induit une mise en décalage radial des fenêtres latérales 9,10 l'une par rapport à l'autre, de l'ordre de 90°. La cartouche 1 est équipée de moyens de manoeuvre 12,13 pour provoquer son changement d'état entre sa position d'ouverture dans laquelle la première fenêtre latérale 9 et la deuxième fenêtre latérale 10 sont placées en superposition, et sa position de fermeture dans laquelle l'organe d'obturation 11 est placé en superposition de la première fenêtre latérale 9 pour interdire un accès au volume intérieur du réceptacle 8. Les moyens de manoeuvre 12, 13 de la cartouche 1 comprennent des moyens de manoeuvre spontanée 12 du réceptacle 8 en position de fermeture de la cartouche 1, qui mettent en oeuvre un organe principal élastiquement déformable 14 interposé entre l'enceinte 7 et le réceptacle 8 sur lesquels il est en prise. Le réceptacle 8 est spontanément entraîné en rotation en position de fermeture de la cartouche 1, de sorte que l'accès au volume intérieur du réceptacle 8 est naturellement interdit. Pour placer la cartouche 1 en position d'ouverture, celle-ci est équipé de moyens de manoeuvre volontaire 13 de la cartouche 1 par un opérateur par rotation inverse du réceptacle 8 à l'intérieur de l'enceinte 7. De tels moyens de manoeuvre volontaire 13 comprennent de préférence une serrure 13' qui conditionne l'ouverture de la cartouche 1 à l'utilisation d'une clé spécifique apte à coopérer avec la serrure 13'.

La cartouche 1 est équipée de moyens de retenue 15 à l'encontre de sa fermeture spontanée par l'organe principal à déformation élastique 14. Ces moyens de retenue 15 sont constitués d'un premier ensemble de blocage 106,107 associant un doigt de brochage 106 coopérant avec un logement 107 ménagé à travers l'enceinte 7. Les moyens de retenue 15 permettent de maintenir la cartouche 1 en position d'ouverture, notamment après sa vidange par l'opérateur autorisé. La cartouche 1 étant maintenue en position d'ouverture, celle-ci est manipulable par un quelconque opérateur en vue de son remplissage.

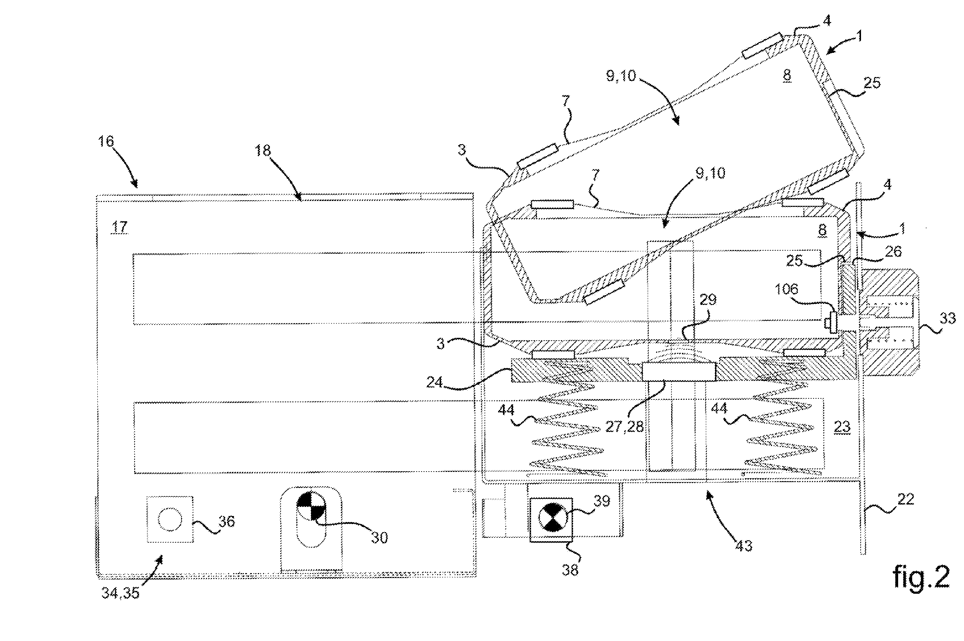

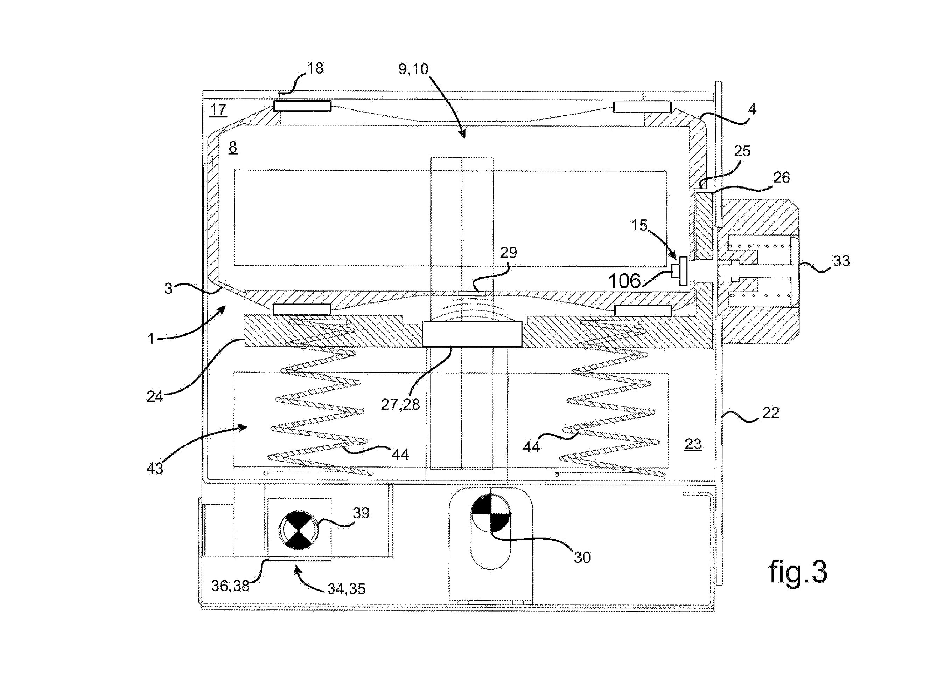

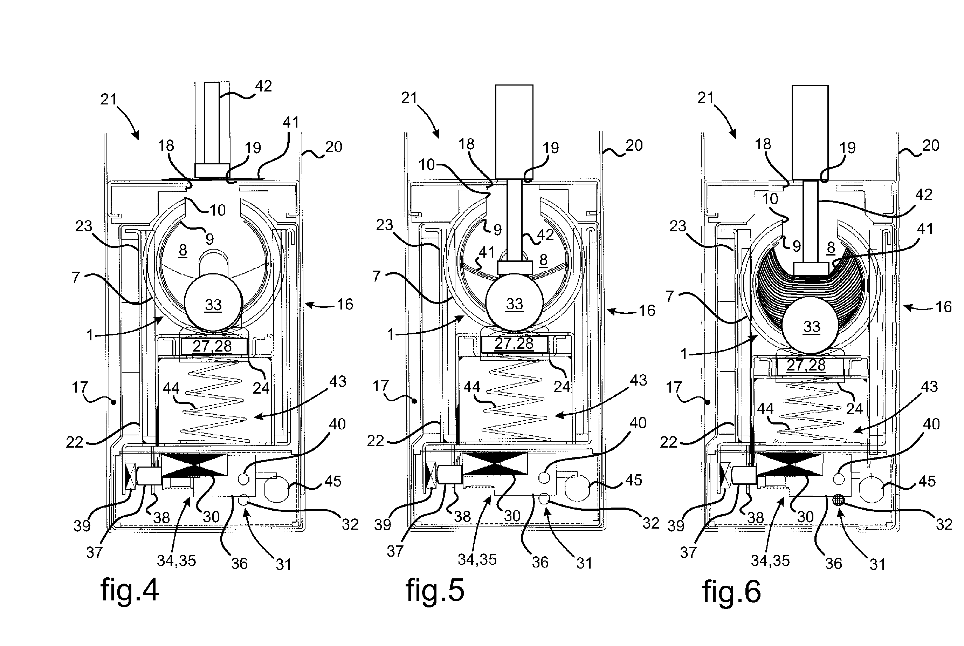

Sur les figures 2 à 9, un coffre 16 est organisé pour le remplissage de la cartouche 1 en interdisant un accès au volume intérieur du réceptacle 8. Cette interdiction perdure depuis le début du remplissage du réceptacle 8, puis après le retrait de la cartouche 1 hors du coffre jusqu'à son ouverture par un personnel autorisé au moyen de la serrure 13' notamment. Le coffre 16 comprend une chambre 17 destinée à recevoir la cartouche 1 en position de remplissage, dans laquelle position de remplissage la première fenêtre latérale 9 que comporte le réceptacle 8 est disposée en regard sur une bouche d'admission 18 des objets à convoyer que comporte le coffre 16. Sur les figures 4 à 9, cette bouche d'admission 18 est elle-même en regard sur une bouche d'évacuation 19 ménagée au travers d'un corps 20 que comprend un appareil de collecte et de distribution 21 des objets à convoyer. La cartouche 1 est introduite à l'intérieur de la chambre 17 en position d'ouverture, l'organe d'obturation 11 étant en position dégagée pour libérer l'accès au volume intérieur du réceptacle 8 successivement à travers ladite bouche d'évacuation 19, puis à travers ladite bouche d'admission 18, puis à travers ladite deuxième fenêtre latérale 10 et à travers ladite première fenêtre latérale 9.

Le coffre 16 est équipé d'un élément de fermeture 22 de la chambre 17 qui est monté coulissant et qui est agencé en tiroir comportant un compartiment 23 de réception de la cartouche 1. L'élément de fermeture 22 est mobile entre une position d'ouverture du coffre 16 et une position de clôture de la chambre 17. La position d'ouverture du coffre 16 correspond à une position de dégagement du compartiment 23 permettant d'installer ou de retirer la cartouche 1. En position de clôture de la chambre 17, le compartiment 23 de réception de la cartouche 1 est confiné à l'intérieur du coffre 16, pour interdire un accès non autorisé à la cartouche 1 et plus particulièrement aux objets introduits à l'intérieur du réceptacle 8 lors de son remplissage. Le compartiment 23 est pourvu d'un berceau 24 de réception de la cartouche 1. Un détrompeur 25,26 associant des reliefs coopérant respectivement ménagés sur le berceau 24 et sur la cartouche 1 permet d'installer la cartouche 1 à l'intérieur du compartiment 23 dans une position prédéfinie correspondante à la position de remplissage de la cartouche 1.

Le coffre 16 est équipé de moyens de contrôle de l'état de la cartouche 1 en position d'ouverture ou de fermeture, et de contrôle de son installation en position de remplissage. Ces moyens de contrôle associent des moyens de détection 27 de la cartouche 1 en position de remplissage et des moyens de détection 28 d'un changement d'état de la cartouche 1, qui sont regroupés dans un même premier capteur 27,28 de détection de la cartouche 1. Ce premier capteur 27,28 est implanté dans le compartiment 23, et plus particulièrement en fond du berceau 24 de réception de la cartouche 1. Le premier capteur 27,28 coopère avec un marquage 29 ménagé sur la cartouche 1, par exemple agencé en trou ménagé au travers de la paroi du corps de la cartouche 1. Un tel marquage 29 agencé en trou permet au premier capteur 27,28 non seulement de détecter la présence de la cartouche 1, mais aussi son état en position d'ouverture ou de fermeture en fonction d'une détection d'un changement de position radiale du réceptacle 8.

Le coffre 16 est équipé de moyens de détection 30 du volume de remplissage en feuilles du réceptacle 8. Ces moyens de détection 30 sont associés à des moyens de visualisation 31, visibles sur les figures 4 à 9, et plus particulièrement à un premier voyant 32. Lorsqu'un seuil prédéterminé de remplissage de la cartouche 1 est atteint, les dits moyens de détection 30 provoquent une activation des moyens de visualisation 31 et une mise en évidence du premier voyant 32. Le coffre 16 comporte un organe de commande 33 pour provoquer la fermeture de la cartouche 1 par un opérateur au vu de l'activation du premier voyant 32. Cet organe de commande 33 est agencé en bouton poussoir monostable, qui coopère avec les moyens de retenue 15 dont est équipée la cartouche 1. Une manoeuvre de l'organe de commande 33 provoque notamment une manoeuvre du doigt de brochage 106, avec pour effet de libérer les moyens de manoeuvre spontanée 12 de la cartouche 1 en position de fermeture.

Le coffre 16 est équipé de moyens d'interdiction 34 d'un accès non autorisé à la cartouche 1 dès son introduction à l'intérieur de la chambre 17. Ces moyens d'interdiction 34 comprennent des moyens de verrouillage 35 de l'élément de fermeture 22 en position de clôture de la chambre 17, dont la mise en oeuvre est placée sous la dépendance des moyens de détection 27 de la cartouche en position de remplissage. Sur l'exemple de réalisation illustré, les moyens de verrouillage 35 comprennent un électroaimant 36 qui est installé à l'intérieur du coffre et qui comporte un pêne 37 coopérant avec un élément à mortaise 38 porté par l'élément de fermeture 22. Le coffre 16 est équipé des moyens de détection 39 du verrouillage de l'élément de fermeture 22 sur le coffre 16, qui sont notamment constitués par un deuxième capteur (39) de détection d'une mise en coopération du pêne 37 avec l'élément à mortaise 38. Ce deuxième capteur (39) est en relation avec les moyens de visualisation 31, pour l'activation d'un deuxième voyant 40 informant l'opérateur du déverrouillage de l'élément de fermeture 22 et de la possibilité de le manoeuvrer vers la position de dégagement du compartiment 23, pour retirer la cartouche 1 remplie et la remplacer par une cartouche 1 vide. De préférence, l'activation de l'électroaimant est temporisée selon une durée suffisante pour permettre à l'opérateur de retirer la cartouche pleine et d'installer une nouvelle cartouche vide en position de remplissage.

Les objets à convoyer sont notamment des valeurs bancaires conformées en feuilles 41. L'appareil de collecte et de distribution 21 est muni d'un organe de poussée 42 des feuilles 41 vers le volume intérieur du réceptacle 8. Pour optimiser le remplissage de la cartouche 1 sans détériorer les feuilles 41, le compartiment 23 est équipé de moyens amortisseurs 43 à l'encontre des efforts exercés par l'organe de poussée 42 contre les feuilles 41, elles-mêmes en appui contre la paroi du réceptacle 8. Ces moyens amortisseurs 41 comprennent un montage en coulissement du berceau 24 de réception de la cartouche 1, qui repose sur un couple d'organes amortisseurs 44 élastiquement déformables. Le remplissage du réceptacle 8 induit progressivement lors de l'amenée des feuilles 41 un rapprochement du berceau 24 vers un troisième capteur (30), qui constitue les moyens de détection 30 du volume de remplissage en feuilles du réceptacle. A partir d'un tel rapprochement, une évaluation du volume de feuilles 41 contenues à l'intérieur du réceptacle 8 peut être détectée par le troisième capteur (30), jusqu'à atteindre le dit seuil prédéterminé de remplissage de la cartouche 1.

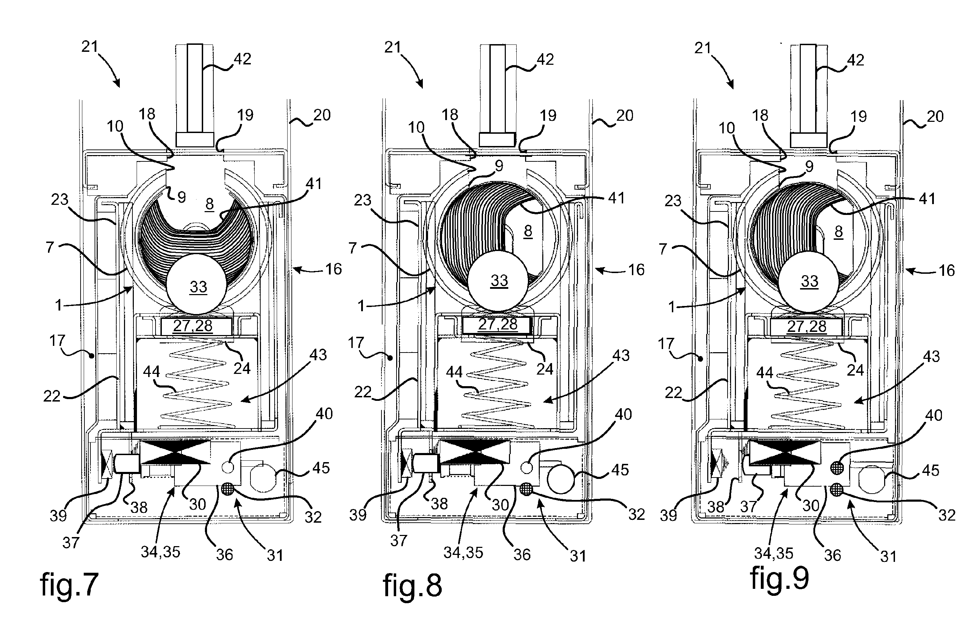

Sur les figures 4 à 9, différentes étapes de mise en oeuvre de l'installation sont représentées. Sur la figure 4, la cartouche 1 est en position de remplissage et l'élément de fermeture 22 est verrouillé. Une feuille 41 est postée dans l'appareil de collecte et de distribution 21 en attente d'être amenée vers l'intérieur du réceptacle 8. Sur la figure 5, une manoeuvre de l'organe de poussée 42 achemine la feuilles 41 à l'intérieur du réceptacle 8, et cette opération est répétée jusqu'au remplissage complet de la cartouche 1. Sur la figure 6, la cartouche 1 est pleine et les moyens de détection 30 du volume de remplissage en feuilles 41 du réceptacle 8 activent les moyens de visualisation 31, et notamment le premier voyant 32. Sur la figure 7, l'organe de commande 33 est manoeuvré par l'opérateur au vu de l'activation du premier voyant 32, et les moyens de retenue 15 de la cartouche 1 sont inhibés pour libérer les moyens de manoeuvre spontanée 12 de la cartouche 1 en position de fermeture. L'état de la cartouche 1 est modifié par sa manoeuvre en position de fermeture. Sur la figure 8, la cartouche 1 est en position de fermeture et l'opérateur manoeuvre un organe de commande de déverrouillage 45 pour activer l'électroaimant 36 et provoquer le déverrouillage de l'élément de fermeture 22 à l'encontre de sa position par défaut de verrouillage. Sur la figure 9, la détection du déverrouillage de l'élément de fermeture 22 par le deuxième capteur 39 active les moyens de visualisation 31, et notamment le deuxième voyant 40, pour indiquer à l'opérateur qu'il peut dégager le compartiment 23 hors de la chambre 17 afin de retirer la cartouche 1 pleine et la remplacer par une cartouche 1 vide. La cartouche 1 pleine étant préalablement placée en position de fermeture, l'accès à son contenu est réservé à une personne autorisée à placer la cartouche 1 en position d'ouverture, notamment à partir d'une action sur les moyens de manoeuvre volontaire 13 équipant la cartouche 1.

## Revendications

1. Installation de remplissage d'une cartouche (1) de convoyage pneumatique en objets conformés en feuilles (41), cet installation associant :
- une dite cartouche (1) qui est de conformation axialement étendue et qui comprend un corps (2) de conformation cylindrique ménageant un réceptacle (8) tubulaire d'objets à convoyer, le réceptacle (8) étant muni d'une fenêtre latérale (9) d'accès à son volume intérieur, la cartouche (1) étant équipée d'un organe d'obturation (11) de la fenêtre latérale (9) et au moins en partie de moyens de manoeuvre (12) de la cartouche (1) procurant son changement d'état entre une position de fermeture et une position d'ouverture, et
- un appareil de collecte et de distribution (21) des feuilles (41), comprenant un corps (20) d'admission des feuilles (41) et un organe (42) d'amenée des feuilles (41) à travers une bouche d'évacuation (19) vers un poste de collecte, et
- ledit poste de collecte, qui est organisé en coffre (16) comportant des moyens de protection procurant un accès réservé aux objets qu'il contient par un opérateur autorisé seulement, et qui est muni d'une bouche d'admission (18) des feuilles (41) en provenance de la bouche d'évacuation (19) que comporte l'appareil de collecte et de distribution (21),
**caractérisée en ce que** le coffre (16) comprend :
- un compartiment (23) de réception de la cartouche (1),
- des moyens de contrôle de la cartouche (1) placée à l'intérieur du coffre (16), au moins de son état en position d'ouverture et de sa mise en une position de remplissage dans laquelle la fenêtre latérale (9) est disposée en regard sur la bouche d'évacuation (19),
- des moyens d'interdiction (34) d'accès à la cartouche (1) en position de remplissage, et
- un organe de commande (33) de la mise en oeuvre des moyens de manoeuvre (12) de la cartouche (1) placée à l'intérieur du coffre (16), modifiant son état depuis sa position d'ouverture initiale vers sa position de fermeture.

2. Installation selon la revendication 1, **caractérisée en ce que** les moyens de protection que comporte le coffre (16) associent les moyens d'interdiction (34) d'accès à la cartouche (1) en position de remplissage, et l'organe de commande (33) de la mise en oeuvre des moyens de manoeuvre (12) de la cartouche (1).

3. Installation selon l'une quelconque des revendications précédentes, **caractérisée en ce que** les moyens de manoeuvre (12) de la cartouche (1) associent des moyens de mobilité relative entre l'organe d'obturation (11) et la fenêtre latérale (9) que comporte le réceptacle (8) qui sont implantés sur la cartouche (1), avec des moyens d'entraînement relatif entre l'organe d'obturation (11) et le réceptacle (8) qui sont indifféremment implantés sur la cartouche (1) ou à l'intérieur du coffre (16).

4. Installation selon la revendication 3, **caractérisée en ce que** les dits moyens d'entraînement sont implantés sur la cartouche et sont constitués de moyens de manoeuvre spontanée (12) de la cartouche (1) en position de fermeture.

5. Installation selon l'une quelconque des revendications précédentes, **caractérisée en ce que** les moyens de contrôle de la cartouche associent des moyens de détection (27) de la cartouche (1) en position de remplissage et des moyens de détection (28) d'un changement d'état de la cartouche (1), qui sont regroupés dans un même premier capteur (27,28) de détection de la cartouche (1) disposée à l'intérieur du coffre (16).

6. Installation selon l'une quelconque des revendications précédentes, **caractérisée en ce que** le coffre (16) comprend une chambre (17) de réception du compartiment (23) et un élément de fermeture (22) de la chambre (17) qui est mobile entre une position de dégagement du compartiment (23) dans laquelle le compartiment (23) est accessible depuis l'extérieur du coffre (16) et une position de clôture de la chambre (17) par l'élément de fermeture (22) confinant le compartiment (23) à l'intérieur du coffre (16).

7. Installation selon la revendication 6, **caractérisée en ce que** le compartiment (23) est implanté sur l'élément de fermeture (22) et **en ce que** le coffre (16) est équipé de moyens de détection (39) de la position relative entre l'élément de fermeture (22) et la chambre (17).

8. Installation selon la revendication 7, **caractérisée en ce que** l'élément de fermeture (22) est agencé en tiroir qui loge le compartiment (23) et qui est monté coulissant sur le coffre (16) par rapport à la chambre (17).

9. Installation selon l'une quelconque des revendications 5 à 8, **caractérisée en ce que** les moyens de détection (28) d'un changement d'état de la cartouche (1) comprennent un premier capteur de détection d'un marquage (29) que comporte la cartouche (1) et dont l'état varie selon les positions respectives d'ouverture et de fermeture de la cartouche (1).

10. Installation selon l'une quelconque des revendications 6 à 9, **caractérisée en ce que** les moyens d'interdiction (34) d'accès à la cartouche (1) en position de remplissage comprennent des moyens de verrouillage (35) de l'élément de fermeture (22) en position de clôture de la chambre (17).

11. Installation selon la revendication 10, **caractérisée en ce que** les moyens de verrouillage (35) sont spontanément placés en position de verrouillage, une manoeuvre des moyens de verrouillage (35) en position de déverrouillage étant placée sous la dépendance des moyens de détection (28) d'un changement d'état de la cartouche (1).

12. Installation selon la revendication 11, **caractérisée en ce que** les moyens de verrouillage (35) sont du type électromagnétique simple effet, dont l'activation provoque une inhibition d'une mise en position spontanée des moyens de verrouillage (35) en position de verrouillage.

13. Installation selon l'une quelconque des revendications 5 à 12, **caractérisée en ce que** l'organe de commande (33) est un organe de commande manuelle accessoirement associé à un organe de commande automatisée dont la mise en oeuvre est placée sous la dépendance des moyens de détection (28) d'un changement d'état de la cartouche.

14. Installation selon l'une quelconque des revendications 4 à 13, **caractérisée en ce que** l'organe de commande (33) est agencé en poussoir coopérant avec des moyens de retenue (15) des moyens de manoeuvre spontanée (12) de la cartouche (1) en position de fermeture.

15. Installation selon l'une quelconque des revendications précédentes, **caractérisée en ce que** le dit organe d'amenée (42) des feuilles (41) vers le coffre (16) est agencé en organe de poussée, et **en ce que** le compartiment (23) loge des moyens amortisseurs (43) à l'encontre de la poussée exercée par l'organe d'amenée (42) des feuilles (41) vers l'intérieur du réceptacle (8) de la cartouche (1).

16. Installation selon l'une quelconque des revendications précédentes, **caractérisé en ce que** le coffre (16) est équipé de moyens de détection (30) du volume de remplissage en feuilles (41) du réceptacle (8) associés à des moyens de visualisation (31) d'au moins un volume maximal prédéterminé de remplissage détecté.

17. Procédé de mise en oeuvre d'une installation selon l'une quelconque des revendications précédentes, **caractérisé en ce qu'**il comprend les opérations consistant à:
- installer la cartouche (1) en position d'ouverture dans le compartiment (23),
- détecter la présence de la cartouche (1) en position d'ouverture et en position de remplissage,
- interdire l'accès à la cartouche (1) en position de remplissage,
- remplir le réceptacle (8) en feuilles (41) à partir de l'appareil de collecte et de distribution (21) des feuilles (41),
- détecter une phase terminale de remplissage de la cartouche (1) correspondante à un volume prédéterminé de feuilles (41) présentes dans le réceptacle (8),
- commander la mise en position de fermeture de la cartouche (1),
- rompre l'interdiction d'accès à la cartouche (1) en position de remplissage et l'extraire hors du coffre (16).

18. Procédé selon la revendication 17, **caractérisé en ce que** l'opération d'installation de la cartouche (1) comprend les opérations consistant à placer la cartouche (1) dans le compartiment en une position exclusive correspondante à la position de remplissage de la cartouche (1), et à manoeuvrer l'élément de fermeture (22) de la chambre (17) depuis la position de dégagement du compartiment (23) vers la position de clôture de la chambre (17).

19. Procédé selon l'une quelconque des revendications 17 et 18, **caractérisé en ce que** l'interdiction d'accès à la cartouche (1) en position de remplissage est spontanément provoquée et **en ce que** la rupture de cette interdiction est autorisée à partir d'une détection de la cartouche (1) en position de fermeture.

20. Procédé selon l'une quelconque des revendications 16 à 19, **caractérisé en ce que** la commande de la mise en position de fermeture de la cartouche (1) est provoquée sous contrôle d'un opérateur à partir d'une détection de la phase terminale de remplissage de la cartouche (1).
